(19) Europäisches Patentamt
European Patent Office
Office européen des brevets

(11) **EP 2 293 503 A1**

(12) **EUROPEAN PATENT APPLICATION**

(43) Date of publication:
**09.03.2011 Bulletin 2011/10**

(51) Int Cl.:
**H04L 25/02** *(2006.01)*

(21) Application number: **09011443.0**

(22) Date of filing: **07.09.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **NTT DOCOMO, INC.**
**Tokyo 100-6150 (JP)**

(72) Inventor: **Auer, Gunther**
**80339 München (DE)**

(74) Representative: **Zimmermann, Tankred Klaus et al**
**Schoppe, Zimmermann, Stöckeler & Zinkler**
**Patentanwälte**
**Postfach 246**
**82043 Pullach bei München (DE)**

Remarks:
Amended claims in accordance with Rule 137(2)
EPC.

(54) **A radio channel estimation using reliability information**

(57)    A radio channel estimator adapted for estimating a radio channel, the radio channel having a reference subchannel (100) through which a reference symbol is provided, a first data subchannel (110) and a second data subchannel (120), wherein the first data subchannel (110) lies between the reference subchannel (100) and the second data subchannel (120). The radio channel estimator comprises a means for estimating the first data subchannel (110) based on the reference subchannel (100) and a first reliability information, and for estimating the second data subchannel (120) based on the reference subchannel (100) and a second reliability information, wherein the second reliability information indicates a lower reliability than the first reliability information.

FIG 1A

EP 2 293 503 A1

**Description**

The present invention is in the field of radio channel estimation as it is used in wireless communication systems, especially when radio channels are estimated using reference subchannels.

Wireless communication systems become more and more sophisticated, high data rate services become more and more available for private use. In order to achieve steady improvement of the radio systems, advanced transmission techniques are investigated, as for example systems employing multiple transmit and receive antennas, known as multiple-input-multiple-output (MIMO) systems. These systems form significant gains in channel capacity. Another approach is to use, for example, orthogonal frequency division multiplexing (OFDM), where, for example, a combination thereof, i.e. MIMO-OFDM, is selected for beyond 3rd generation (B3G) mobile communication systems.

As the exploitation of the mobile radio channel becomes more and more advanced, coherent detection has to be facilitated. For example, to facilitate coherent detection, training symbols, so-called pilot or reference symbols, known to the receiver are commonly used, cf. J. K. Cavers, "Performance of tone calibration with frequency offset and imperfect pilot filter," IEEE Trans. Veh. Technol., vol. 40, pp. 426-434, May 1991 and P. A. Hoeher, "TCM on frequency-selective land-mobile fading channels," in Proc. 5th Tirrenia Intern. Workshop on Digital Commun., Tirrenia, Italy, pp. 317-328, Sept. 1991.

In conventional systems, the channel is first estimated at the known pilot positions and in a second step, filtering or interpolation is applied in order to recover the channel coefficients at the positions of the unknown data symbols, compare also N. W. K. Lo, D. D. Falconer, and A. U. H. Sheikh, "Adaptive equalization and diversity combining for mobile radio using interpolated channel estimates," IEEE Trans. Veh. Technol., vol. 40, pp. 636-645, Aug. 1991.

It is an option to improve performance of channel estimation by utilizing iterative processing. In that case, data symbols, which are reliably detected serve as pseudo-training symbols. In literature, solutions for one-dimensional, as for example, time domain or frequency domain channel estimation may be found, as well as for 2-dimensional, for example, time domain and frequency domain, and for 3-dimensional, for example, time, frequency and spatial domain, channel estimation methods can be found, cf. G. Auer, "Channel estimation in two dimensions for OFDM systems with multiple transmit antennas," Global Telecommunications Conference, 2003, GLOBECOM '03, IEEE, vol. 1, pp. 322-326 Vol.1, Dec. 2003; P. Hoeher, S. Kaiser, and P. Robertson, "2-dimensional pilot-symbol-aided channel estimation," in Proc. Information Theory, IEEE International Symposium on, pp. 123-127, June 1997 and G. Auer, "3D pilot aided channel estimation," in Proc. Wireless Communications and Networking Conference, 2009. WCNC 2009, IEEE, pp. 1-6, Apr. 2009.

One of the major drawbacks of training-based channel estimation is the overhead caused by the training symbols. Training symbols may e.g. reduce the efficiency in the radio domain in which they are used. In other words, training symbols may reduce the power efficiency and the bandwidth efficiency. Hence, any means reducing the amount of training symbols necessary would improve the power and bandwidth efficiency of the transmission system. Particularly in transmission systems employing multiple transmit and receive antennas, i.e. in MIMO systems, the training overhead can be very significant.

Therefore, it is the objective of the present invention to provide an improved concept for channel estimation in radio systems.

The objective is achieved by a radio channel estimation according to claim 1, a method for radio channel estimation according to claim 14 and a computer program according to claim 15.

The present invention is based on the finding that reliability information can be considered for channel estimates of radio subchannels. In other words, radio channel estimates with a high reliability are available for reference subchannels, which are radio subchannels for which reference symbols or pilot symbols are provided. It is then one finding of the present invention that the reliability of the channel estimate decreases, the further a data subchannel for which a radio channel estimate is to be derived lies away from a reference subchannel. Furthermore, the reliability of one of two data subchannels decreases if that subchannel is located further away from the nearest reference channel, i.e. is less correlated to the nearest reference channel.

Starting out from this finding, it is a further finding of the present invention that reliability information can be updated in dependence on further reference subchannels. In other words, reliability information for channel estimates for data subchannels can be determined starting out from reference subchannels. Since reference subchannels are often provided in a grid, as for example, in regular repetitions, reliability information on the channel estimates between two repetitions of a reference channel can be distributed or propagated through the radio dimensions.

In other words, for example, in the time domain, pilot symbols or reference subchannels may be provided in a regular time sequence. Between two of such reference subchannels there are data subchannels and the reliability information of the channel estimates for the data subchannels in between may decrease the further a data subchannel lies away from the reference subchannels, i.e. the lower the correlation between the radio channel estimate for the data subchannel and the radio channel estimate for the reference subchannel.

It is a further finding of the present invention that the reliability of the channel estimate of data subchannel may be influenced by multiple reference subchannels. In other words, in the above example, a reference channel provided before the respective data subchannel may influence the reliability of the channel estimate for the data subchannel and a reference subchannel provided after the data subchannel may influence the reliability information of the channel estimate of the data subchannel as well. Moreover, such influence is also given throughout multiple radio domains, i.e. a channel estimate for a data subchannel may be influenced by radio channel estimates for reference subchannels in different radio domains.

It is another finding that such channel estimation can be modeled as a factor-graph. The factor-graph may be utilized in multiple radio dimensions or domains, as, for example, in the time domain, the frequency domain, the spatial domain, the polarization domain, etc. Therefore, it is another finding of the present invention that a reliability information of a channel estimate of a data subchannel may be influenced by reference subchannels from different radio domains. Moreover, the reliability can be expressed, for example, in terms of soft information as, for example, log-likelihood-ratios.

It is a further finding of the present invention that once such soft information is available for the channel estimates, it may be exploited to be used together with soft information from data detection.

Another finding of the present invention provides an iteration loop, in which, similar to the turbo concept, iterations are carried out with respect to soft information for the channel estimates and the soft information of data detection. In other words, data may be detected and data reliability information may be provided. In a loop, the reliability information on channel estimates may be improved on the basis of reliability information on the data and vice versa.

It is a further finding of the present invention that a graph-based multi-dimensional soft channel and data estimator can be utilized, exploiting correlations in the time and/or frequency and/or space and/or polarization domain. Moreover, embodiments may be particularly suitable for MIMO-OFDM systems, such as LTE (Long-Term Evolution) and LTE-A (LTE-Advanced).

It is a further finding of the present invention that factor-graphs can be used for modeling such channel estimation, which are used in conventional concepts only for detection, cf. D. Fertonani, A. Barbieri, and G. Colavolpe, "Novel graph-based algorithms for soft-output detection over dispersive channels," in Proc. Global Telecommunications Conference, IEEE GLOBECOM 2008, IEEE, pp. 1-5, Dec. 2008 or for refining channel estimates, cf. H. Niu, M. Shen, J. Ritcey, and H. Liu, "A factor graph approach to iterative channel estimation and LDPC decoding over fading channels," Wireless Communications, IEEE Transactions on, vol. 4, pp. 1345-1350, July 2005, and C. Novak, G. Matz, and F. Hlawatsch, "Factor graph based design of an OFDM-IDMA receiver performing joint data detection, channel estimation, and channel length selection," in Acoustics, Speech and Signal Processing, IEEE International Conference on, pp. 2561-2564, Apr. 2009. Conventionally, channel estimation and data detection is performed separately, such as using a Wiener filter, cf. P. Hoeher, S. Kaiser, and P. Robertson, "Two-dimensional pilot-symbol-aided channel estimation," in Proc. Information Theory., IEEE International Symposium on, pp. 123-127, June 1997, and various ad-hoc algorithms. Embodiments may provide the advantage that channel estimation and data detection is performed jointly, by applying graph-based soft channel estimation and data detection. Reliability information from the channel estimator can be taken into account by the data detector, and vice-versa reliability information from the data detector can be taken into account by the channel estimator. Another finding of the present invention is utilizing a $\Delta$ transfer function for graph-based channel estimation and detection, which can be applied to an arbitrary number of dimensions. For example, in an embodiment a 4D graph-based detector could exploit correlations in time, frequency, spatial and polarization domain.

Embodiments may provide the advantage that filtering or interpolation may not be necessary, but may optionally be applied for acquisition and/or post-processing. Embodiments of the present invention may provide the advantage that less overhead due to pilots compared to the conventional pilot grid for MIMO-OFDM may be utilized. Moreover, an improved performance by performing channel estimations simultaneously in multiple domains may be achieved by embodiments.

Moreover, improved performance may be achieved by employing soft channel estimation and data detection, therewith improving both the quality of soft channel estimation and the quality of data detection. The channel estimation and the data estimation can be performed jointly, further improving the respective quality.

Embodiments may be applied to fast fading channels. However, embodiments may not always utilize filtering or interpolation, but may optionally be applied for acquisition and/or post-processing.

Embodiments of the present invention will be detailed using the accompanying figures, in which

Fig. 1a    illustrates a radio channel being estimated by an embodiment;

Fig. 1b    illustrates a 2-dimensional radio channel grid of reference channels being used in an embodiment;

Fig. 2    illustrates a 3-dimensional pilot pattern being used in an embodiment;

Fig. 3    shows a probability density function being used in an embodiment;

Fig. 4      shows a factor graph of a time-invariant MIMO-OFDM system in an embodiment;

Fig. 5      illustrates a 1-dimensional factor graph of an embodiment;

Fig. 6      illustrates a 2-dimensional factor graph of an embodiment;

Fig. 7      illustrates a 3-dimensional factor graph of an embodiment;

Fig. 8      illustrates simulation results of a 1-dimensional and 2-dimensional embodiment;

Fig. 9      illustrates simulation results for different training spacings of embodiments; and

Fig. 10     illustrates simulation results for embodiments having different training structures.

In the following the terms "pilot symbol", "reference symbol", "reference subchannel", "pilot subchannel", "training symbol", "training subchannel" are used synonymously. Moreover, structures or sequences of such reference symbols may be called reference pattern or reference grids. Moreover the terms "radio domain", "radio dimension" and "radio resource domain" will be used synonymously.

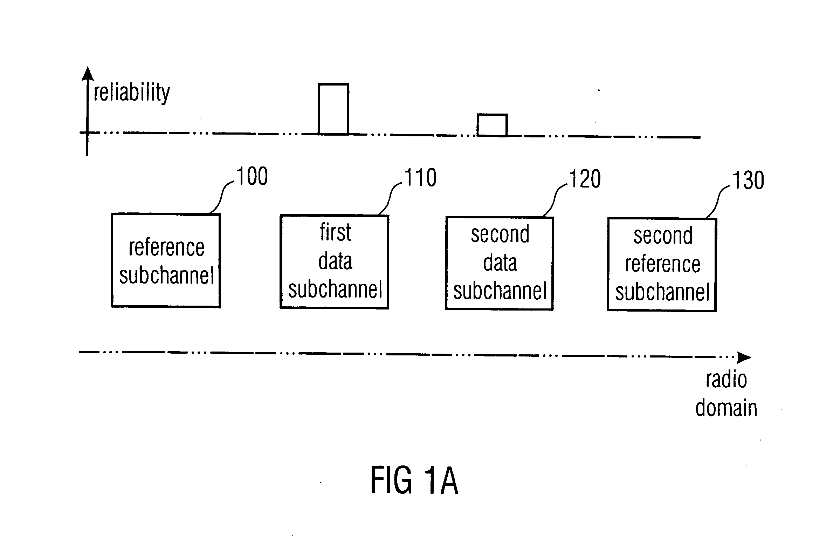

In one embodiment, a radio channel estimator is adapted for estimating a radio channel, which is illustrated in Fig. 1a. Fig. 1a shows a view chart with a reference subchannel 100, a first data subchannel 110 and a second data subchannel 120. In other words, the radio channel comprises a reference subchannel 100 through which a reference symbol is provided, a first data subchannel 110 and a second data subchannel 120, wherein the first data subchannel 110 lies between the reference subchannel 100 and the second data subchannel 120.

As indicated in Fig. 1a, the reference subchannel 100, the first data subchannel 110 and the second data subchannel 120 are aligned along a radio domain. The term radio domain or radio resource domain will be used in the following to indicate that the radio channel may extend to one or multiple dimensions. Possible radio domains are, for example, time, frequency, space, receive antennas, transmit antennas, polarization, etc. Fig. 1a shall indicate that the subchannels 100, 110 and 120 are located in one radio domain, i.e., they may in embodiments, for example, correspond to a number of time slots, a number of subcarriers, a number of antennas, etc.

In embodiments, the radio channel estimator may comprise a means for estimating the first data subchannel 110 based on the reference subchannel 100 and first reliability information and for estimating the second data subchannel 120 based on the reference subchannel 100 and second reliability information, wherein the second reliability information indicates a lower reliability than the first reliability information.

Fig. 1a shows on top of the symbolized subchannels a view chart indication a reliability. The view charts indicate that the first data subchannel 110 has a higher reliability than the second data subchannel 120. In other words, in embodiments reliability information may be taken into account for determining channel estimates for data subchannels, optionally for reference channels as well. In other words, a channel estimate may have the highest reliability when being determined for the reference subchannel 100. Starting out from the reference subchannel 100, a channel estimate may also be derived for the first data subchannel 110, however, with a decreased reliability. The decreased reliability may be taken into account in terms of reliability information by the respective means for estimating. Similarly, for the second data subchannel 120, which is located, as also indicated in Fig. 1a, even further away from the reference subchannel 100, a reliability information may be taken into account, which is even lower than the reliability information for the first data subchannel 110. In the following, reliability information may refer to an information about a reliability of an estimate of a radio channel response, which can be associated with a data symbol, i.e. a data subchannel, or with a reference symbol. i.e. a reference subchannel.

In embodiments, and in the following, the reference subchannel 100 may correspond to a first reference subchannel 100, and the radio channel may further comprise a second reference channel 130, which is also shown in Fig. 1a and through which another reference symbol is provided. The second data subchannel 120 may lie or be located between the first data subchannel 110 and the second reference subchannel 130. Moreover, the second data subchannel 120 may lie or may be located closer to the first reference subchannel 100 than to any other reference subchannel.

In other words, any reference subchannel may influence all data subchannels being located in its neighborhood, the neighborhood refers to any close-by radio resources in any radio domain. However, as indicated in Fig. 1a, it is assumed for embodiments that the second data subchannel 120 is located closer to the first reference subchannel 100 than to any other reference subchannel, in particular the second reference subchannel 130.

The above term "closer" is to be interpreted in the terms of a correlation, i.e. the radio channel of the second data subchannel 120 may be more correlated to the first reference subchannel 100 than to any other reference subchannel, and referring to Fig. 1a, particularly the second reference subchannel 130.

In embodiments, the reliability information may be given in terms of a statistical derivation, for example in terms of a variance. Such reliability information may also be provided in terms of a log-likelihood ratio. In one embodiment, the means for estimating can be adapted for estimating the first data subchannel 110 such that the first reliability information indicates a statistical derivation of an estimate of the first data subchannel 110 and the means for estimating can be further adapted for estimating the second data subchannel 120 indicating a statistical derivation of an estimate of the second data subchannel 120. Embodiments may use for a higher reliability of an estimate for a data subchannel a lower statistical derivation of the respective channel estimate from its mean value.

In other embodiments, the means for estimating can be adapted for estimating the first data subchannel 110 such that the first reliability information indicates a variance of a first probability density function with a mean value corresponding to an estimate of the reference subchannel 100. Moreover, the means for estimating can be adapted for estimating the second data subchannel 120 such that the second reliability information indicates a variance of a second probability density function with the mean value corresponding to the estimate of the reference subchannel 100. In other embodiments the mean values for the channel estimates of the first data subchannel 110 and the second data subchannel 120 may differ, in some embodiments they may be derived by interpolation of channel estimates for reference subchannels.

In embodiments, the means for estimating can be adapted for estimating the reference subchannel 100 based on the reference symbol. Furthermore, in embodiments, the means for estimating can be adapted for estimating the reference subchannel 100 to obtain the estimate of the reference subchannel 100 and for determining a reference reliability information for the estimate of the reference subchannel 100.

In the following, more detailed embodiments will be illuminated. Considering a MIMO-OFDM system with $N_T$ transmit antennas and $N_R$ receive antennas, the equivalent discrete-time model of this channel can be given by

$$y_n^l[k] = \sum_{m=1}^{N_T} h_{n,m}^l[k] \cdot x_m^l[k] + w_n^l[k] , \quad 1 \leq n \leq N_R$$

$$(1)$$

where $l \in \{0,1,...,L\text{-}1\}$ is the subcarrier index with $L$ denoting the number of active subcarriers and $k \in \{0,1,...,K\text{-}1\}$ is the time index with $K$ denoting the number of OFDM symbols in one burst. $y_n^l[k]$ marks the received symbol at the $n$-th receiver antenna and $x_m^l[k]$ means the transmit symbol at the $m$-th transmit antenna, respectively. $h_{n,m}^l[k]$ represents the channel coefficient connecting the $m$-th transmit antenna and the $n$-th receive antenna at the $l$-th subcarrier and the $k$-th time index. $w_n^l[k]$ is an additive white Gaussian noise (AWGN) sample with zero mean and variance $\sigma_w^2$ at the $n$-th receive antenna, the $l$-th subcarrier and the $k$-th time index. If no confusion is possible, in the following, the indices are dropped in order to simplify the notation.

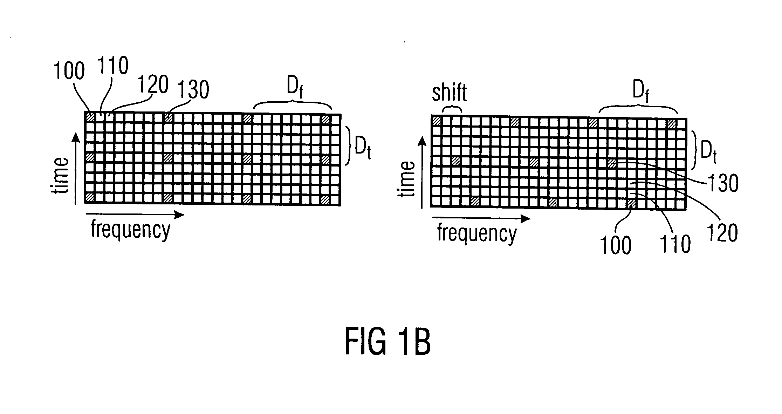

In the following, different pilot designs will be investigated. Fig. 1b illustrates a symmetric training grid on the left-hand side and a shifted training grid on the right-hand side. Both viewgraphs show a time frequency plane in which pilot or reference symbols or subchannels are indicated by grey squares within the grid. The terms for the pilot spacing or the distance in the respective radio domain are referenced by $D_f$ in the frequency domain and $D_t$ in the time domain. The respective symbol positions within the reference subchannels are reserved for training. Fig. 1b shows two 2-dimensional pilot grids. As an example, Fig. 1b illustrated the first reference subchannel 100, the first data subchannel 110, the second data subchannel 120 and the second reference subchannel 130 in line with the above description.

In Fig. 1b it can be seen on the left-hand side that the spacing of the frequency domain between two subsequent reference subchannels is $D_f$ 8 subcarriers, and the time domain is $D_t$ 4 time slots, respectively. A similar spacing can be seen on the right-hand side of Fig. 1b, however, the entire subchannel grid is shifted.

Training symbols, also known as pilot symbols, can be used to enable coherent detection at the receiver, CQI (channel quality information) measurements and channel estimation. Since pilot symbols increase overhead and consume transmission power, the amount of training should in general be as low as possible.

Generally a pilot design can be separated into two parts:

- The pilot pattern which specifies the pilot position
- The pilot type which indicates whether the pilots include user specific transmit processing or not.

For two dimensional (2D) pilot aided channel estimation (PACE), in the literature different pilot grids have been suggested, including symmetric and shifted training grid, see Fig. 1b and G. Auer, "Channel estimation in two dimensions for OFDM systems with multiple transmit antennas," Global Telecommunications Conference, 2003. GLOBECOM '03, IEEE, vol. 1, pp. 322-326 Vol. 1, Dec. 2003, IST-4-027756 WINNER II, D6.13.14: WINNER II System Concept Description, Dec. 2007. In the conventional concepts the spacing in time $D_t$ and the spacing in frequency $D_f$ may need to satisfy the sampling theorem, if the redundancy by channel coding is not taken into account in channel estimation.

Embodiment may employ graph-based channel estimation and may not be limited to a specific pilot pattern. An arbitrary arrangement of the pilot symbols can be possible. Since graph-based channel estimation is not necessarily utilizing interpolation, the spacing of training symbols in time and frequency can be chosen independently. Since embodiments may perform joint channel estimation and data detection taking channel coding into account, the spacing of training symbols in the frequency and time domain may not be bound to the sampling theorem. This may generally be valid, i.e. in embodiments the sampling theorem may be violated in any radio domain, taking advantage of enhanced channel estimation enabled by considering a reliability information distribution.

In multiple antenna scenarios, channel estimation may face significant interference due to multi-antenna interference (MAI). In order to mitigate the effects of MAI for the training symbols, orthogonal pilot sets are often implemented. Both orthogonal and non-orthogonal pilot sets can easily be implemented in graph-based channel estimation and utilized by embodiments.

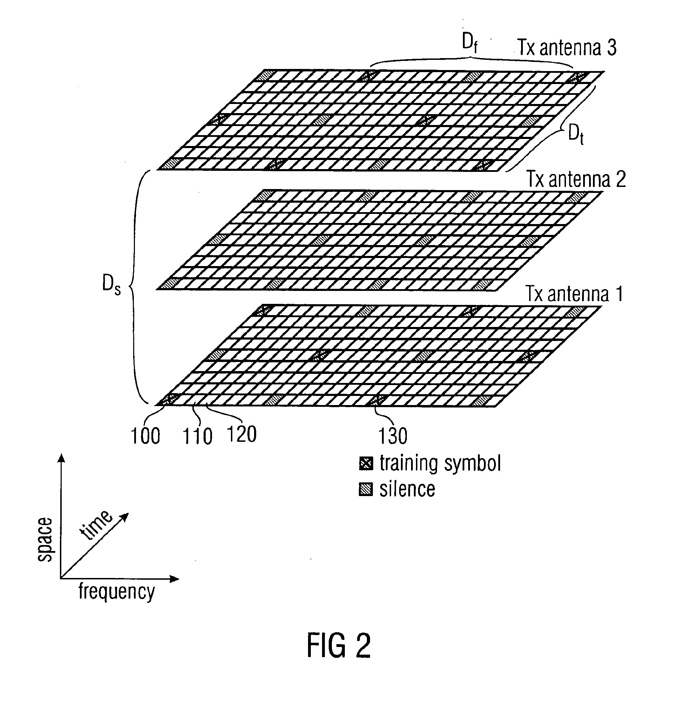

Fig. 2 shows a 3-dimensional (3D) pilot pattern or pilot grid. According to Fig. 2, the distribution of pilot symbols is 3-dimensional and disjoint. Compared to Fig. 1b, the spatial domain has been added. For the spacing of the pilot symbols in the spatial domain, $D_s$ is used as a parameter. In Fig. 2, grey squares with a cross indicate a training symbol, where grey squares indicate silence. Fig. 2 illustrates the distance in the radio channel between adjacent reference subchannels. For example, at the bottom plane shown in Fig. 2, there are two training symbols located in the frequency domain, which have a spacing of 16 subcarriers, as an example. The same way the distance between the two reference subchannels in the time domain in the example of Fig. 2 is four time slots. It can also be seen from Fig. 2 that the distance for the spatial domain is two transmit antennas. In reference to the above description of the channel estimator, the first reference subchannel 100, the first data subchannel 110, the second data subchannel 120 and the second reference subchannel are exemplified in Fig. 2.

Fig. 2 shows a disjoint pilot pattern for three transmit antennas. The spacing of pilots in time $D_t$, frequency $D_f$ and space $D_s$ are given for the effective pilot symbol spacing.

If user-specific transmit processing is applied, i.e. e.g. in case of zero-forcing precoding, the need for a second type of pilot symbols may arise, in embodiments the so-called dedicated pilots. Dedicated pilots are also subject to user-specific transmit processing, whereas common pilots can be used for all available users. The implementation of dedicated pilots is straightforward and needs no further change in the graph-based channel estimation.

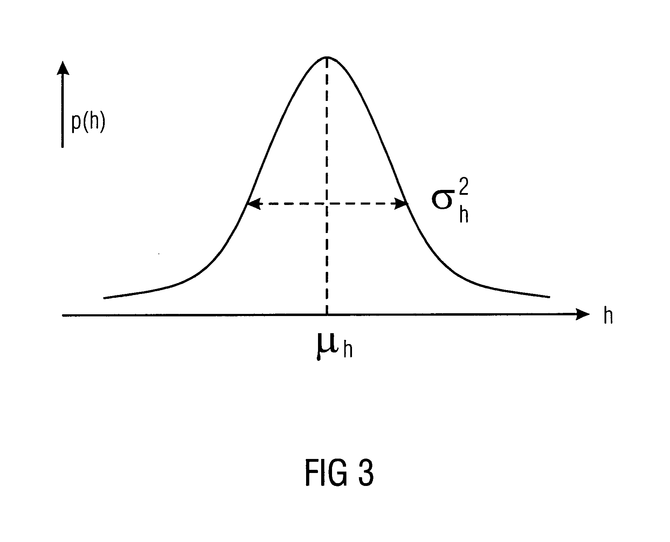

Fig. 3 illustrates a probability density function (pdf) of a Gaussian distribution of the parameter $h$. The pdf shown in Fig. 3 has a mean value of $\mu_h$ and a variance of $\sigma_h^2$.

For a SISO channel with zero-mean additive white Gaussian noise sample, the channel model can be simplified as

$$y = h \cdot x + w \,. \qquad (2)$$

If x is known to the receiver, a least squares channel estimator (LSCE) yields

$$\hat{h} = y/x \,. \qquad (3)$$

By substituting (2) into (3), it can easily be found that

$$h = \hat{h} - w/x \,. \qquad (4)$$

Since x is known and w is a zero-mean Gaussian variable with variance $\sigma_w^2$, w/x also Gaussian distributed

with variance $\sigma_w^2 \big/ |x|^2$ . Hence, *h* is also Gaussian distributed. The complete information of *h* can thus be represented

by mean $\mu_h = \hat{h}$ and variance $\sigma_h^2 = \sigma_w^2 \big/ |x|^2$ .In this case, $\mu_h$ denotes the hard estimate of *h* and $\sigma_h^2$ carries the reliability information of *h*, $p(h) \sim CN\left(\mu_h, \sigma_h^2\right)$ is called the soft channel estimate.

Information on channel coefficients can be exchanged via transfer function nodes throughout the graph in embodiments. Two coefficients are connected to the transfer function nodes, thus only exchanging their information. Information exchange in a transfer function node can be modeled as follows:

$$\mu_{h'} \;=\; \mu_h \tag{5}$$

$$\sigma_{h'}^2 \;=\; \sigma_h^2 + \sigma_\Delta^2 \;, \tag{6}$$

where Δ is described by

$$\Delta \doteq h - h' \;, \tag{7}$$

 with *h*' being the neighboring coefficient of *h* in one dimension, i.e. *h*' corresponds to an adjacent subchannel. Δ can be further approximated by a Gaussian pdf

$$\Delta \sim \mathcal{N}\left(0, \sigma_\Delta^2\right) \;. \tag{8}$$

As previously described, the mean value may represent a hard estimate of a coefficient or subchannel and the variance may be interpreted as its reliability information. With the added variance of the Δ transfer function, the reliability of the mean value of the neighboring coefficient decreases. For the initialization of the factor graph, in embodiments at the beginning the information at a training position may be exchanged. Their mean values can then be distributed throughout the graph, decreasing their reliability information with increasing distance to the training position. That means coefficients closer to training are more reliable than those further away, cf. Fig 1a.

In the following, an embodiment will be illuminated carrying out one dimensional channel estimation. As an example, channel estimation in the frequency domain will be considered first. Embodiments, when carrying out 1-dimensional channel estimation, are not limited to the frequency domain, any radio domain may be used for 1-dimensional channel estimation. Furthermore, a factor graph can be used to detail the embodiment.

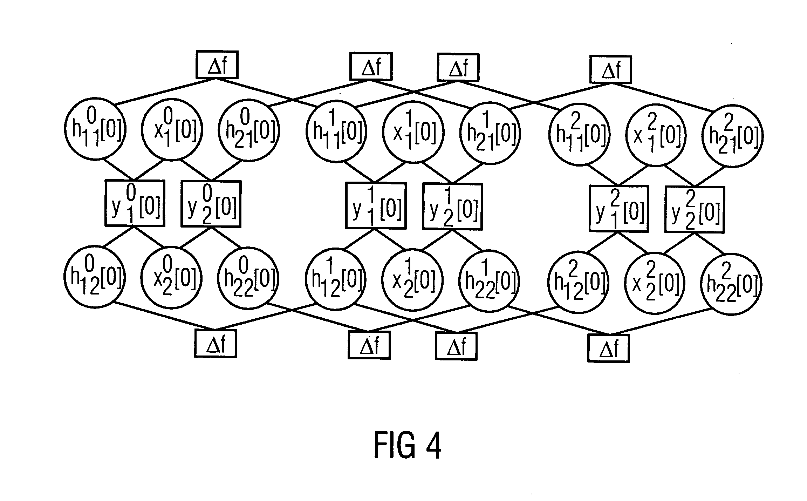

Fig. 4 illustrates a factor graph of a time-invariant MIMO-OFDM system with $N_T$=2 transmit antennas, $N_R$=2 receive antennas and L=3 subcarriers.

A factor graph, cf. F. R. Kschischang, B. J. Frey, and H.-A. Loeliger, "Factor graphs and the sumproduct algorithm," IEEE Trans. Inf. Theory, vol. 47, pp. 498-519, Feb. 2001, is a bipartite graph visualizing the factorization of certain global functions subject to maximization/minimization. In embodiments for data transmission, there are two uncertain variables to be estimated, the channel coefficients and the data symbols. Fig. 4 shows a possible factor graph of a time-invariant MIMO-OFDM system utilized in one embodiment.

In the factor graph of this embodiment, the square boxes with *y* denote channel observation nodes. Circles with *x* represent symbol nodes and circles with *h* represent channel coefficient nodes, i.e. subchannels, which are to be estimated. Embodiments using graph-based channel and data estimation may perform an extrinsic information exchange among different nodes. More details of the message passing rules among observation, data and channel coefficient nodes can be found in T. Wo, C. Liu, and P. A. Hoeher, "Graph-based iterative gaussian detection with soft channel estimation for MIMO systems," in Proc. ITG Int. Conf. on Source and Channel Coding, Ulm, Jan. 2008., T. Wo, C. Liu, and P. A. Hoeher, "Graph-based soft channel and data estimation for MIMO systems with asymmetric LDPC codes," in Proc. IEEE International Conference on Communications (ICC 2008), (Bejing, China), pp. 620-624, May 2008.

In embodiments, channel estimation may be carried out using the introduction of transfer nodes. In the factor graph, these transfer nodes are connected with the adjacent channel coefficient nodes. For 1D channel estimation in the frequency domain, these transfer nodes, denoted as $\Delta f$, can be used to represent the relationship between $h_{n,m}^{l}[k]$ and $h_{n,m}^{l+1}[k]$, e.g. corresponding to the first data subchannel 110 and the second data subchannel 120. Similarly, in the time domain, the transfer nodes are connected between $h_{n,m}^{l}[k]$ and $h_{n,m}^{l}[k+1]$ by the transfer function $\Delta t$. The next section will be focused on describing the message passing rules of these transfer nodes in details.

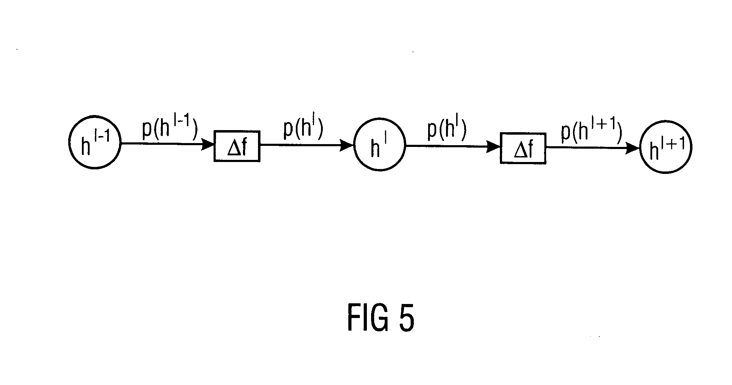

In the following, Fig. 5 will be used to detail the forward propagation of soft channel information or reliability information. Fig. 5 shows 3 channel coefficient nodes, which are labeled $h^{l-1}$, $h^{l}$ and $h^{l+1}$. These channel coefficient nodes are connected by transfer functions, which are labeled $\Delta f$. In an embodiment $h^{l-1}$ could correspond to the reference subchannel 100, $h^{l}$ could correspond to the first data subchannel 110 and $h^{l+1}$ could correspond to the second data subchannel 120.

Via the nodes $\Delta f$, the soft information of $h^{l}$ can be transported forwards (from $h^{l}$ to $h^{l+1}$) or backwards (from $h^{l}$ to $h^{l-1}$). Here, it is started from the forward propagation. Thus, $\Delta f$ can be defined as

$$\Delta f \doteq h^{l+1} - h^{l} , \qquad (9)$$

where $\Delta f$ represents channel variations in the frequency domain. Given a Rayleigh fading channel, $\Delta f$ is found to be Gaussian distributed with zero mean and variance $\sigma_f^2$. From the above it is known that the soft information of $h^{l}$ can be of the form

$$p(h^l) : h^l \sim \mathcal{CN}(\mu_{h^l}, \sigma_{h^l}^2) . \qquad (10)$$

For simplicity, it is assumed $h^l$ and $\Delta f$ are independent. Thus, the soft information of $h^{l+1}$ can be expressed as follows:

$$p(h^{l+1}) : h^{l+1} \sim \mathcal{CN}(\mu_{h^{l+1}}, \sigma_{h^{l+1}}^2) , \qquad (11)$$

where

$$\mu_{h^{l+1}} = \mu_{h^l} , \quad \sigma_{h^{l+1}}^2 = \sigma_{h^l}^2 + \sigma_{\Delta f}^2 . \qquad (12)$$

Since increasing the variance means increasing the uncertainty, it is easy to understand this message passing rule. In embodiments the mean value of one channel coefficient may be passed to the neighboring one, meanwhile, increasing its uncertainty. This procedure is also valid for the backward procedure ($p(h^l) \to p|h^{l-1}|$).

In order to perform the message passing, the value of $\sigma_{\Delta f}^2$ may be determined a priori in embodiments. In general, $\sigma_{\Delta f}^2$ can be obtained via simulations. However, for Rayleigh multipath fading channels with uniformly distributed propagation delays, $\sigma_{\Delta f}^2$ can be well predicted by the following formula:

$$\sigma^2_{\Delta f} \approx 2(1 - \text{sinc}(2\tau_{max}F)) \,,$$

$$(13)$$

where $T_{max}$ is the maximum propagation delay and F is the frequency spacing between two adjacent subcarriers.

In embodiments, the channel coefficient nodes can be updated in several directions. In other words, according to the above and Fig. 5, channel coefficients for subchannels can be updated in the frequency domain in direction of increasing subcarriers, which was also referred to as transporting or propagating the soft information forward. In other words, in this embodiments once the factor graph is initialized in the frequency domain, soft information propagates from the lower subcarriers to the higher subcarriers.

In embodiments, subsequently, soft information may be propagated from the higher subcarriers to the lower subcarriers, i.e., in the backward direction referring to Fig. 5. Therefore, in embodiments, channel coefficient nodes may receive reliability information or soft information from multiple directions and also from multiple radio domains, radio resource domains, respectively. The means for estimating can therefore be adapted for updating the first and second reliability information based on adjacent subchannel reliability information, a subchannel being adjacent to the first 110 or second data subchannel 120 in a radio resource domain and the means for estimating can be further adapted for determining the adjacent subchannel reliability information for the adjacent subchannel.

In general, in embodiments, the radio channel may comprise a plurality of data subchannels, each having a reliability information, and a plurality of reference subchannels in different radio resource domains. The means for estimating can then be adapted for estimating the plurality of data subchannels based on the plurality of reference subchannels and the reliability information of the plurality of data subchannels.

In other words, in embodiments at a channel coefficient node reliability information from multiple adjacent subchannels in multiple domains may be combined.

In the above illuminated embodiment, the reliability information corresponds to a variance of a Gaussian distribution. In some embodiments, reliability information for a channel coefficient node or subchannel may be available from multiple directions and/or multiple domains. Referring to Fig. 5, at the channel coefficient node $h^l$, reliability information may be available from the preceding subchannel, in the case of Fig. 5 from the preceding subcarrier $h^{l-1}$. Moreover, reliability information can be available from the subsequent subchannel $h^{l+1}$, being propagated in the opposite direction, when compared to the direction indicated by the arrows in Fig. 5.

In embodiments, reliability information may be combined at the channel coefficient node. In some embodiments, the reliability information corresponds to Gaussian distributions, determined by their mean value and variance. Therefore, multiple probability density functions may be combined, in some embodiments this may be carried out by scaling the respective pdfs and by convolution. In other embodiments, the combined pdf may be approximated by another Gaussian distribution, for which the parameters are obtained by combining the mean values and variances of the pdfs from the different directions, domains respectively.

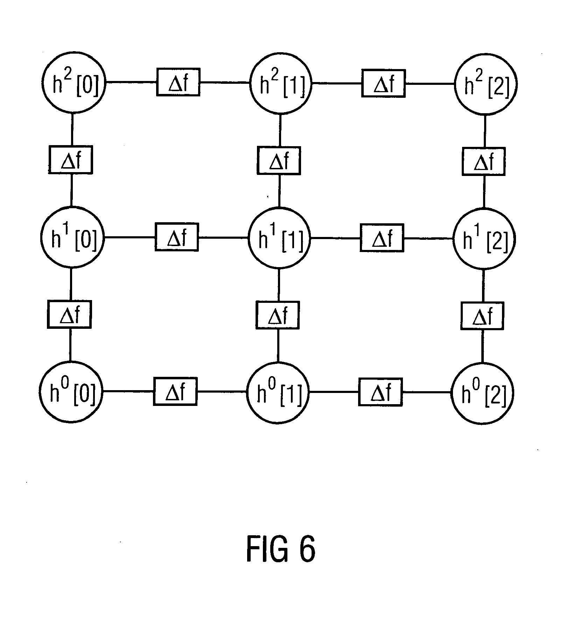

Fig. 6 illustrates a factor graph of channel coefficient node connections for a 2-dimensional channel estimation of an embodiment. As an example, in the embodiment for which the factor model is shown in Fig. 6, it is assumed that channel estimation is carried out in the time domain and in the frequency domain. In general, embodiments carrying out 2-dimensional channel estimation may carry out channel estimation in any two radio domains. In Fig. 6, the above explained annotation is kept. In the time domain, the transfer function is labeled by $\Delta t$, in the frequency domain by $\Delta f$, respectively. The channel coefficient nodes are accordingly labeled by $h^{subcarrier}$ [time index].

For the above mentioned 1D channel estimation, strong correlations among adjacent channel coefficients in the frequency domain are assumed. In reality, channel coefficients in the time domain are more or less correlated, which gives a start of using transfer nodes in the time domain. The effects of Doppler frequency shift caused by the mobility of the receiver lead to the variation of channel coefficients in the time domain. In this case, a time transfer node is necessary to represent the channel variation from a certain time index to the neighboring one. As a result, the channel coefficients can not only be connected via transfer nodes in the frequency domain, but also in the time domain, as illustrated in Fig. 6. Similar to the definition in the frequency domain, the variations in time can be represented as

$$\Delta t \doteq h(k+1) - h(k) \,.$$

$$(14)$$

The message passing rule of channel coefficients from one time index to the next one is the same as they were introduced above. The only difference lies in the calculation of $\sigma^2_{\Delta t}$. For a Rayleigh fading channels with Jakes' spectrum, an analysis of $\sigma^2_{\Delta t}$ yields

$$\sigma^2_{\Delta t} \approx 1 - \cos(2\pi f_{Dmax} T_s) \; ,$$

$$(15)$$

where $f_{Dmax}$ is the maximum Doppler frequency shift and $T_s$ is the OFDM symbol duration.

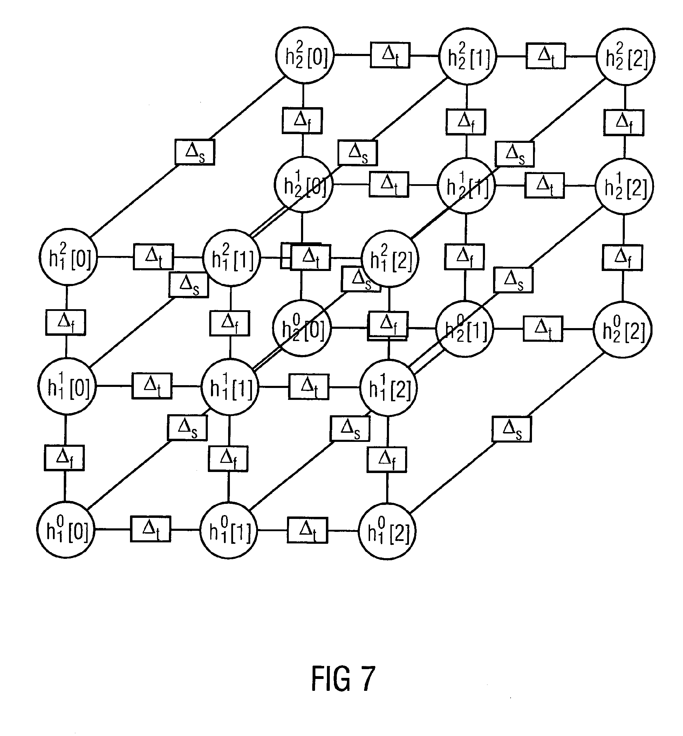

Fig. 7 illustrates an embodiment for a 3-dimensional channel estimation. In Fig. 7 a factor graph of channel coefficient connections is shown for 3-dimensional channel estimation. The above introduced notation is kept, where the factor graph shown in Fig. 7 uses, as an example, time, frequency and the spatial domain. In general, embodiments carrying out 3-dimensional channel estimations are not limited to these 3 dimensions. The transfer functions in the spatial domain are noted by Δs. In general, the notation used in Fig. 7 is $h^{subcarrier}_{antenna}$ [time index].

The subindex antenna may refer to receive or transmit antennas. Further improvement of the channel estimation can be achieved by exploring the spatial dimension. In wide-area channels, where base-stations are usually located above rooftops and are characterized by a small angular spread, the correlation between antennas is significantly large.

Given such correlated antennas, coefficients can be connected via a transfer function Δs in the spatial domain. The variation in space can be represented as

$$\Delta s \doteq h_s - h_{s+1} \; ,$$

$$(16)$$

where the lower index $s$ represents either the transmit or the receive antennas. A factor graph of channel coefficient nodes suitable for 3D channel estimation is shown in Fig. 7.

For correlated receive and transmit antennas an extension to 4D channel estimation can be implemented straightforward in embodiments. Extending a factor graph capable of $M$-dimensional channel estimation can be achieved in embodiments by adopting the transfer function to the dynamics of the fading process of the dimension.

In embodiments a 5D channel estimation could utilize the correlations between time, frequency and spatial domain (both receive and transmit antennas) as well as the polarization of a signal.

Messages are exchanged throughout the graph via the transfer functions. A message sent from one coefficient node to a neighbor may only consist of extrinsic information. That means a message sent to a coefficient node may only contain information from other neighboring node and not itself. Scheduling describes the order in which messages are exchanged throughout the graph. In embodiments the exchange of messages can be done for one dimension after the other. It can be beneficial, in terms the number of iterations needed, to start with the dimensions with the highest correlation. In a strong frequency-selective, slowly time-variant channel, messages for the time domain can be exchanged first followed by the frequency domain. The order of the message exchange can be easily adopted.

In embodiments, the radio channel estimator may further comprise a means for detecting first data from the first data subchannel 110 based on the estimate of the first data channel 110, and for determining a first data reliability information on the estimate of the first data. The means for detecting can be further adapted for detecting second data from the second data subchannel 120 based on the estimate of the second data subchannel 120 and for determining second data reliability information on the estimate of the second data. Soft data detection may be carried out in embodiments, i.e. data may be detected from the data subchannels using soft information, i.e. data reliability information may be available for the data as well. In other words, soft information may be available for the channel estimates and for the detected data. Soft information may in both cases be provided in terms of log-likelihood-ratios.

The means for estimating can be adapted for updating the first reliability information based on the first data reliability information to obtain an updated first reliability information. In other words, the reliability of the channel estimates may be improved by considering the detected data and the data reliability information. Accordingly, the second reliability information can be updated based on the second data reliability information to obtain an updated second reliability information. In other words, an iteration may be carried out by embodiments. First, channel estimates can be determined according to the above embodiments before data is detected by using soft detection. Once the soft information, i.e. the data reliability information, becomes available, the reliability of the channel estimate may be improved and updated.

Moreover, the means for detecting may be adapted for detecting updated first data and for determining updated first data reliability information based on the updated first reliability information and, correspondingly, the means for detecting can be adapted for detecting updated second data and for determining updated second data reliability information based on the updated second reliability information. In other words, in embodiments, an iteration loop may be implemented, where data reliability and channel reliability may be updated in an alternating way.

Embodiments may use the turbo concept in order to iterate and improve reliability on channel estimates and data estimates. Multiple iterations may be carried out in embodiments. Therefore, soft data detection contributes to improve channel estimation, and vice versa. In embodiments extrinsic information obtained by channel estimation on terms of reliability information and extrinsic information obtained by data detection may be exchanged.

Generally, in embodiments, the reference subchannel 100, the first data subchannel 110 and the second data subchannel 120 may correspond to one of or a combination of the group of different time slots, different subcarriers, different spatial subchannels, different receive antennas, different transit antennas or different polarizations.

In embodiments, the means for estimating can be adapted for estimating the first data subchannel 110 based on a first reliability information being based on a distance to the reference subchannel 100. The term distance may correspond to a distance in the respective radio domain, i.e. it may correspond to a number of radio resources between the reference subchannel 100 and the first data subchannel 110. As already mentioned, radio resources or radio resource domains may correspond to any of time resources, frequency resources, spatial resources in terms of transmit or receive antennas, spatial subchannels in terms of MIMO channel decomposition, polarizations, etc. Correspondingly, the means for estimating may be adapted for estimating the second data subchannel 120 based on a second reliability information being based on another distance to the reference subchannel 100. The reference subchannel 100, the first data subchannel 110 and the second data subchannel 120 may correspond to different radio resources in the same radio resource domain and a distance may correspond to a number of radio resources in the resource domain.

In general, the radio channel may comprise a plurality of data subchannels, each having a reliability information and a plurality of reference subchannels in different radio resource domains, wherein the means for estimating can be adapted for estimating the plurality of data subchannels based on a plurality of reference subchannels and the reliability information of the plurality of data subchannels.

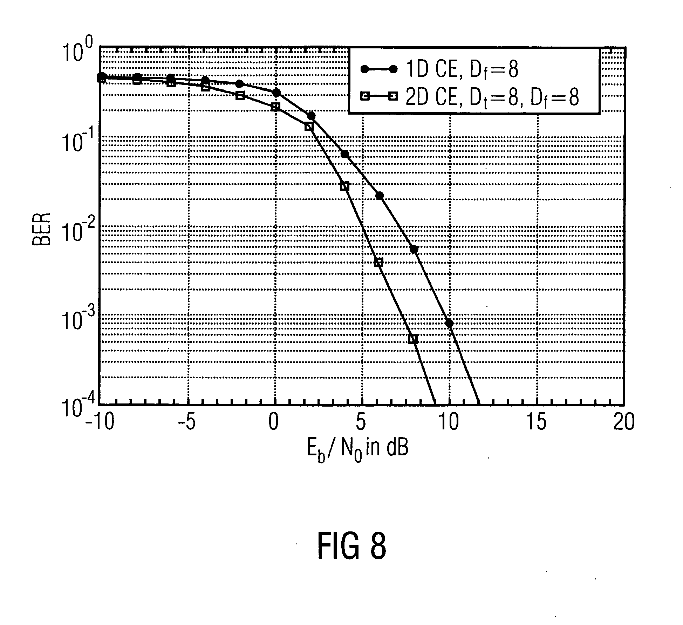

In the following, simulation results will be presented indicating the advantages of some embodiments. Fig. 8 shows bit error rate (BER) results versus bit energy $E_b$ per noise density $N_0$. The view chart depicted in Fig. 8 shows two charts, one for the 1-dimensional channel estimation using the black circles, and one showing the simulation results for the 2-dimensional channel estimation using squares.

All simulation results were created with BPSK signaling, $N_T = N_R$ = 2 antennas, 128 OFDM subcarriers, 6 OFDM symbols, a repetition code with code rate = 1=4, and the WINNER C2 (NLOS) channel model (D 1.1.2 V1.2 WINNER II Channel Models, 2008.).

For the 1D simulation results shown in Fig. 8, the channel is assumed to be time-invariant and frequency-selective. Training is inserted every 8th subcarrier, that means a total of 16 training symbols is used for 128 OFDM subcarriers. For the 2D results, the channel is also changing for every OFDM symbol. Due to the increased diversity, the performance of the 2D factor-graph is improved.

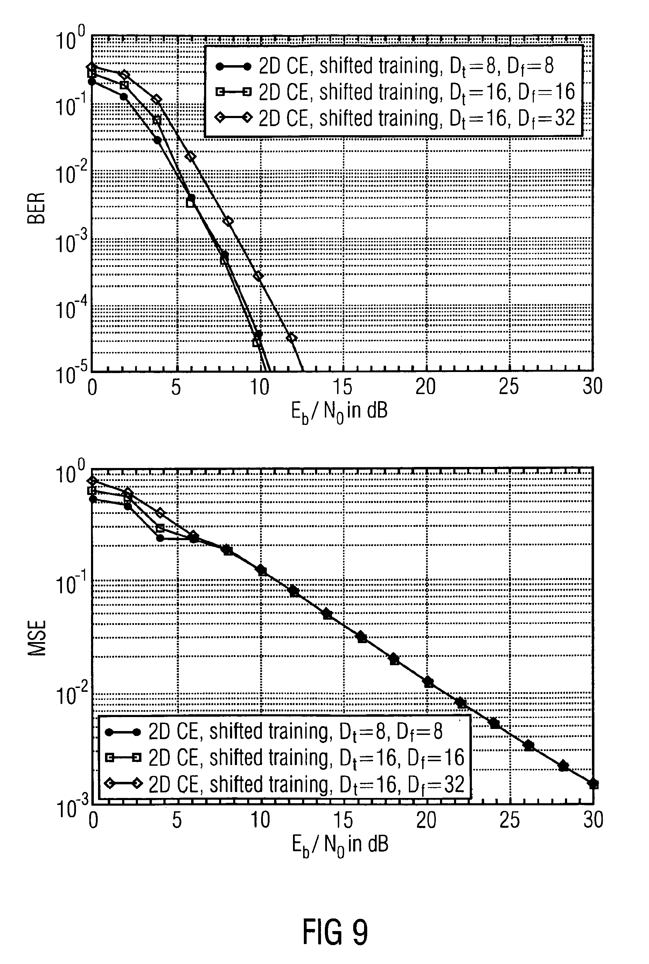

Fig. 9 shows simulation results for different training spacings, i.e., for different spacings of reference subchannels. The view chart on the left-hand side of Fig. 9 depicts three charts for BER results with different spacings. Black circles indicate 2-dimensional channel estimation for shifted training symbols with $D_t=8$ and $D_f=8$. Squares indicate 2-dimensional channel estimation for a shifted training sequence with $D_t=16$ and $D_f=16$. Diamonds indicate the 2-dimensional channel estimation for shifted training sequences with $D_t=16$ and $D_f=32$. In Fig. 9 on the right-hand side mean square error (MSE) results for different spacings are indicated. The same symbols are used for the view chart on the left-hand side of Fig. 9.

Fig. 9 shows the BER and MSE results for 2D channel estimation and data detection with different spacings. With increased spacing of training symbols the performance of both MSE and BER results are slightly worse in the low SNR region but are converging quickly. With $D_f = 32$ the BER performance is decreased by 2dB at a level of $10^{-5}$.

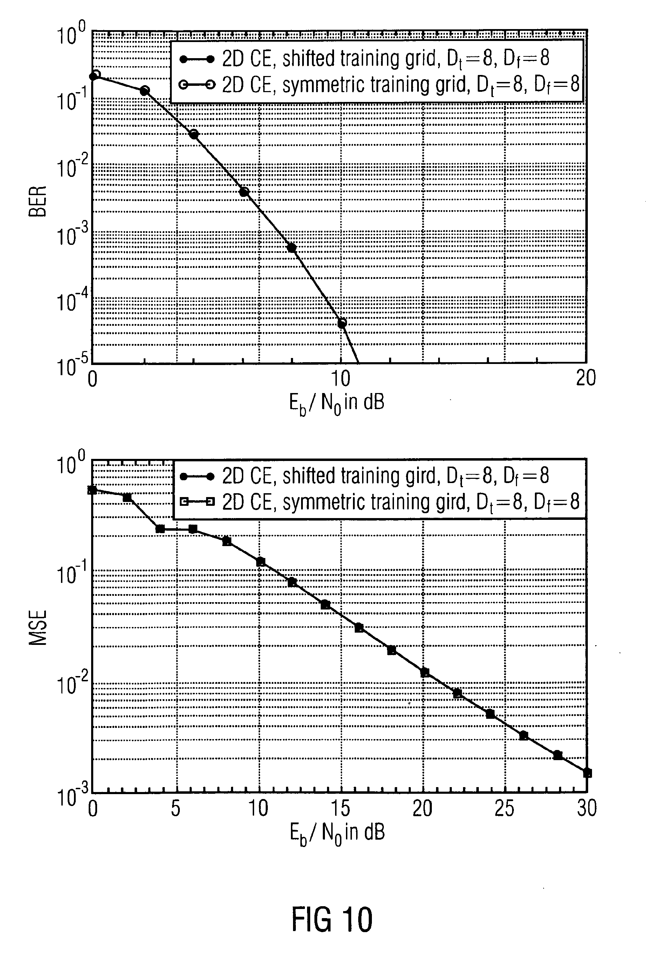

Fig. 10 shows a comparison for different training structures. Two view charts are depicted in Fig. 10, where BER results are shown on the left-hand side and MSE results are shown on the right-hand side. On the left-hand side, black circles indicate a 2-dimensional channel estimation for a shifted training grid with $D_t=8$ and $D_f=8$. Circles indicate the same simulations for a symmetric training grid using the same parameters. On the right-hand side, squares are used to indicate the results for the symmetric training grid. All simulations use $D_t=8$ and $D_f=8$. Summarizing, Fig. 10 displays the results for two different training structures, which are shifted and symmetric. Both arrangements reach the same performance.

By incorporating the novel concept of $\Delta$ transfer functions into graph-based channel estimation, the correlation between channel coefficients can be exploited in an arbitrary number of dimensions. Hence, graph-based multi-dimensional (1D, 2D, 3D, 4D, 5D) soft channel and data estimation exploiting correlations in time and/or frequency and/or spatial and/or polarization domain can be performed.

Embodiments of the present invention provide the advantage that less overhead due to pilots or reference subchannels compared to the conventional pilot grids for MIMO-OFDM are needed. Moreover, embodiments may achieve an improved performance by performing channel estimation simultaneously in multiple domains. Improved performances can also be achieved by employing soft channel estimation and data detection, in some embodiments in a joint way.

Moreover, embodiments may provide the advantage that filtering or interpolation is not necessary, but may optionally be applied for acquisition and/or post-processing.

Depending on certain implementation requirements of the inventive methods, the inventive methods can be implemented on hardware or on software. The implementation can be performed using a digital storage medium, a particular disc, DVD or CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer or processor.

While the foregoing has been particularly shown and described with reference to particular embodiments thereof, it will be understood by those skilled in the art that various other changes in the form and details may be made without departing from the spirit and scope thereof. It is to be understood that various changes may be made in adapting two different embodiments without departing from the broader concepts disclosed herein and comprehended by the claims that follow.

**Claims**

1. A radio channel estimator adapted for estimating a radio channel, the radio channel having a reference subchannel (100) through which a reference symbol is provided, a first data subchannel (110) and a second data subchannel (120), wherein the first data subchannel (110) lies between the reference subchannel (100) and the second data subchannel (120), comprising:

   a means for estimating the first data subchannel (110) based on the reference subchannel (100) and first reliability information, and for estimating the second data subchannel (120) based on the reference subchannel (100) and second reliability information, wherein the second reliability information indicates a lower reliability than the first reliability information.

2. The radio channel estimator of claim 1, wherein the reference subchannel (100) corresponds to a first reference subchannel (100) and wherein the radio channel further comprises a second reference channel (130), through which another reference symbol is provided, and wherein the second data subchannel (120) lies between the first data subchannel (110) and the second reference subchannel (130), wherein the second data subchannel (120) lies closer to the first reference subchannel (100) than to any other reference subchannel.

3. The radio channel estimator of one of the preceding claims, wherein the means for estimating is adapted for estimating the first data subchannel (110) such that the first reliability information indicates a statistical derivation of an estimate of the first data subchannel (110) and wherein the means for estimating is adapted for estimating the second data subchannel (120) such that the second reliability information indicates a statistical derivation of an estimate of the second data subchannel (120).

4. The radio channel estimator of one of the preceding claims, wherein the means for estimating is adapted for estimating the first data subchannel (110) such that the first reliability information indicates a variance of a first probability density function with a mean value corresponding to an estimate of the reference subchannel (100), and wherein the means for estimating is adapted for estimating the second data subchannel (120) such that the second reliability information indicates a variance of a second probability density function with the mean value corresponding to the estimate of the reference subchannel (100).

5. The radio channel estimator of one of the preceding claims, wherein the means for estimating is adapted for estimating the reference subchannel (100) based on the reference symbol.

6. The radio channel estimator of one of the claims 4 or 5, wherein the means for estimating is adapted for estimating the reference subchannel (100) to obtain the estimate of the reference subchannel (100) and for determining a reference reliability information for the estimate of the reference subchannel (100).

7. The radio channel estimator of one of the preceding claims, further comprising a means for detecting first data from the first data subchannel (110) based on an estimate of the first data subchannel (110) and for determining a first data reliability information on the estimate of the first data, and wherein the means for detecting is further adapted for detecting second data from the second data subchannel (120) based on an estimate of the second data subchannel (120) and for determining second data reliability information on the estimate of the second data.

8. The radio channel estimator of claim 7, wherein the means for estimating is adapted for updating the first reliability information based on the first data reliability information to obtain an updated first reliability information and for updating the second reliability information based on the second data reliability information to obtain an updated second reliability information.

9. The radio channel estimator of claim 8, wherein the means for detecting is adapted for detecting updated first data and for determining updated first data reliability information based on the updated first reliability information and wherein the means for detecting is adapted for detecting updated second data and for determining updated second data reliability information based on the updated second reliability information.

10. The radio channel estimator of one of the preceding claims, wherein the reference subchannel (100), the first data subchannel (110) and the second data subchannel (120) are corresponding to one of or a combination of the group of different time slots, different subcarriers, different spatial subchannels, different receive antennas, different transmit antennas or different polarizations.

11. The radio channel estimator of one of the preceding claims, wherein the means for estimating is adapted for estimating the first data subchannel (110) based on the first reliability information being based on a distance to the reference subchannel (100) and wherein the means for estimating is adapted for estimating the second data subchannel (120) based on the second reliability information being based on another distance to the reference subchannel (100), the reference subchannel (100), the first data subchannel (110) and the second data subchannel (120) corresponding to different radio resources in the same radio resource domain and the distance corresponding to a number of radio resources in the radio resource domain.

12. The radio channel estimator of one of the preceding claims, wherein the means for estimating is adapted for updating the first and the second reliability information based on adjacent subchannel reliability information, a subchannel being adjacent to the first or second data subchannels (110, 120) in a radio resource domain and wherein the means for estimating is adapted for determining the adjacent subchannel reliability information for the adjacent subchannel.

13. The radio channel estimator of one of the preceding claims, wherein the radio channel comprises a plurality of data subchannels, each having a reliability information, and a plurality of reference subchannels in different radio resource domains and wherein the means for estimating is adapted for estimating the plurality of data subchannels based on the plurality of reference subchannels and the reliability information of the plurality of data subchannels.

14. A method for estimating a radio channel, the radio channel having a reference subchannel (100) for which a reference symbol is provided, a first data subchannel (110) and a second data subchannel (120), wherein the first data subchannel (110) lies between the reference subchannel (100) and the second data subchannel (120), comprising the steps of
estimating the first data subchannel (110) based on the reference subchannel (100) and a first reliability information; and
estimating the second data subchannel (120) based on the reference subchannel (100) and the second reliability information, wherein the second reliability information indicates a lower reliability than the first reliability information.

15. Computer program having a program code for performing the method of claim 14 when the computer program runs on a computer or a processor.

**Amended claims in accordance with Rule 137(2) EPC.**

**1.** A radio channel estimator adapted for estimating a radio channel, the radio channel having a reference subchannel (100) through which a reference symbol is provided, a first data subchannel (110) and a second data subchannel (120), wherein the first data subchannel (110) has a higher correlation to the reference subchannel (100) than the second data subchannel (120), comprising:

means for estimating the reference channel based on the reference symbol thereby obtaining an estimated reference channel coefficient represented by its hard estimate ($\mu_h$) and its reliability ($\sigma_h^2$),

**characterized in that**
the radio channel estimator is adapted to transfer the reference channel coefficient's hard estimate ($\mu_h$) and a reduced reliability ($\sigma_h^2$) to the first data subchannel (110) and to the second data subchannel (120) such that the first data subchannel (110) has a first reliability information and the second data subchannel (120) has a second reliability information, wherein the second reliability information indicates a lower reliability than the first reliability information, and
the first data subchannel (110) is estimated based on the reference subchannel coefficient's hard estimate ($\mu_h$) and the first reliability information, and the second data subchannel (120) is estimated based on the reference subchannel coefficient's hard estimate ($\mu_h$) and second reliability information.

2. The radio channel estimator of claim 1, wherein the reference subchannel (100) corresponds to a first reference subchannel (100) and wherein the radio channel further comprises a second reference channel (130), through which another reference symbol is provided, and wherein the second data subchannel (120) has a higher correlation to the first reference subchannel (100) than to any other reference subchannel.

3. The radio channel estimator of one of the preceding claims, wherein the means for estimating is adapted for estimating the first data subchannel (110) such that the first reliability information indicates a statistical derivation of an estimate of the first data subchannel (110) and wherein the means for estimating is adapted for estimating the second data subchannel (120) such that the second reliability information indicates a statistical derivation of an estimate of the second data subchannel (120).

4. The radio channel estimator of one of the preceding claims, wherein the means for estimating is adapted for estimating the first data subchannel (110) such that the first reliability information indicates a variance of a first probability density function with a mean value corresponding to an estimate of the reference subchannel (100), and wherein the means for estimating is adapted for estimating the second data subchannel (120) such that the second reliability information indicates a variance of a second probability density function with the mean value corresponding to the estimate of the reference subchannel (100).

5. The radio channel estimator of one of the preceding claims, further comprising a means for detecting first data from the first data subchannel (110) based on an estimate of the first data subchannel (110) and for determining a first data reliability information on the estimate of the first data, and wherein the means for detecting is further adapted for detecting second data from the second data subchannel (120) based on an estimate of the second data subchannel (120) and for determining second data reliability information on the estimate of the second data.

6. The radio channel estimator of claim 5, wherein the means for estimating is adapted for updating the first reliability information based on the first data reliability information to obtain an updated first reliability information and for updating the second reliability information based on the second data reliability information to obtain an updated second reliability information.

7. The radio channel estimator of claim 6, wherein the means for detecting is adapted for detecting updated first data and for determining updated first data reliability information based on the updated first reliability information and wherein the means for detecting is adapted for detecting updated second data and for determining updated second data reliability information based on the updated second reliability information.

8. The radio channel estimator of one of the preceding claims, wherein the reference subchannel (100), the first data subchannel (110) and the second data subchannel (120) are corresponding to one of or a combination of the group of different time slots, different subcarriers, different spatial subchannels, different receive antennas, different transmit antennas or different polarizations.

9. The radio channel estimator of one of the preceding claims, wherein the radio channel comprises a plurality of data subchannels, each having a reliability information, and a plurality of reference subchannels in different radio resource domains and wherein the means for estimating is adapted for estimating the plurality of data subchannels based on the plurality of reference subchannels and the reliability information of the plurality of data subchannels.

10. A method for estimating a radio channel, the radio channel having a reference subchannel (100) for which a reference symbol is provided, a first data subchannel (110) and a second data subchannel (120), wherein the first data subchannel (110) has a higher correlation to the reference subchannel (100) than the second data subchannel (120), comprising:

estimating the reference channel based on the reference symbol thereby obtaining an estimated reference channel coefficient represented by its hard estimate ($\mu_h$) and its reliability ($\sigma_h^2$),

**characterized by**

transferring the reference channel coefficient's hard estimate ($\mu_h$) and a reduced reliability ($\sigma_h^2$) to the first data subchannel (110) and to the second data subchannel (120) such that the first data subchannel (110) has a first reliability information and the second data subchannel (120) has a second reliability information, wherein the second reliability information indicates a lower reliability than the first reliability information,

estimating the first data subchannel (110) based on the reference subchannel coefficient's hard estimate ($\mu_h$) and the first reliability information; and

estimating the second data subchannel (120) based on the reference subchannel coefficient's hard estimate ($\mu_h$) and the second reliability information.

**11.** Computer program having a program code for performing the method of claim 10 when the computer program runs on a computer or a processor.

FIG 1A

reliability

radio domain

100 reference subchannel

110 first data subchannel

120 second data subchannel

130 second reference subchannel

FIG 1B

FIG 2

FIG 3

EP 2 293 503 A1

$\Delta f$   $\Delta f$   $\Delta f$   $\Delta f$

$h_{11}^{0}[0]$   $x_{1}^{0}[0]$   $h_{21}^{0}[0]$   $h_{11}^{1}[0]$   $x_{1}^{1}[0]$   $h_{21}^{1}[0]$   $h_{11}^{2}[0]$   $x_{1}^{2}[0]$   $h_{21}^{2}[0]$

$y_{1}^{0}[0]$   $y_{2}^{0}[0]$   $y_{1}^{1}[0]$   $y_{2}^{1}[0]$   $y_{1}^{2}[0]$   $y_{2}^{2}[0]$

$h_{12}^{0}[0]$   $x_{2}^{0}[0]$   $h_{22}^{0}[0]$   $h_{12}^{1}[0]$   $x_{2}^{1}[0]$   $h_{22}^{1}[0]$   $h_{12}^{2}[0]$   $x_{2}^{2}[0]$   $h_{22}^{2}[0]$

$\Delta f$   $\Delta f$   $\Delta f$   $\Delta f$

FIG 4

FIG 5

FIG 6

FIG 7

FIG 8

FIG 9

FIG 10

Europäisches
Patentamt

European
Patent Office

Office européen
des brevets

# EUROPEAN SEARCH REPORT

Application Number

EP 09 01 1443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MING ZHAO ET AL: "Iterative Turbo Channel Estimation for OFDM System over Rapid Dispersive Fading Channel" IEEE TRANSACTIONS ON WIRELESS COMMUNICATIONS, vol. 7, no. 8, 1 August 2008 (2008-08-01), pages 3174-3184, XP011233163 IEEE SERVICE CENTER, PISCATAWAY, NJ, US ISSN: 1536-1276 * page 3175, column 1, paragraph 3 * * Section IV, first paragraph * * page 3178, column 1, paragraph 2 - page 3179, column 2, paragraph 1 * ----- | 1-15 | INV. H04L25/02 |
| X | WO 02/093859 A1 (SAMSUNG ELECTRONICS CO LTD [KR]) 21 November 2002 (2002-11-21) * page 2, line 19 - line 30 * * page 4, line 15 - page 5, line 16 * * page 6, line 2 - line 30 * * page 10, line 2 - line 23 * ----- | 1-3,5,7, 10,13-15 | |
| X | EP 1 211 819 A1 (MATSUSHITA ELECTRIC IND CO LTD [JP]) 5 June 2002 (2002-06-05) * paragraph [0010] * * paragraph [0015] - paragraph [0019] * * paragraph [0030] - paragraph [0034] * * figure 5 * ----- | 1-3,5,7, 11,14-15 | **TECHNICAL FIELDS SEARCHED (IPC)** H04L |
| A | US 2005/135324 A1 (KIM YUN-HEE [KR] ET AL) 23 June 2005 (2005-06-23) * paragraph [0014] * * paragraph [0020] * * paragraph [0057] * * paragraph [0093] - paragraph [0095] * * paragraph [0099] - paragraph [0100] * ----- -/-- | 1-3,5-7, 10,13-15 | |

The present search report has been drawn up for all claims

| Place of search | Date of completion of the search | Examiner |
|---|---|---|
| The Hague | 9 March 2010 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 01 1443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | TIANBIN WO ET AL: "Graph-Based Soft Channel and Data Estimation for MIMO Systems with Asymmetric LDPC Codes" COMMUNICATIONS, 2008. ICC '08. IEEE INTERNATIONAL CONFERENCE ON, IEEE, PISCATAWAY, NJ, USA, 19 May 2008 (2008-05-19), pages 620-624, XP031265443 ISBN: 978-1-4244-2075-9 * Section III.B * ----- | 1,4,14 | |
| A | WO 2006/075273 A1 (KONINKL PHILIPS ELECTRONICS NV [NL]; ZHU XIA [CN]; LI YAN [CN]; DAI YA) 20 July 2006 (2006-07-20) * page 15, line 4 - line 17 * * page 16, line 1 - line 4 * * figures 3,4 * ----- | 1,11-12, 14 | |

TECHNICAL FIELDS
SEARCHED (IPC)

The present search report has been drawn up for all claims

| Place of search | Date of completion of the search | Examiner |
|---|---|---|
| The Hague | 9 March 2010 | Moreno, Marta |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

**ANNEX TO THE EUROPEAN SEARCH REPORT
ON EUROPEAN PATENT APPLICATION NO.**

EP 09 01 1443

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2010

| Patent document cited in search report | | Publication date | Patent family member(s) | | Publication date |
|---|---|---|---|---|---|
| WO 02093859 | A1 | 21-11-2002 | CN | 1462533 A | 17-12-2003 |
| | | | EP | 1308011 A1 | 07-05-2003 |
| | | | KR | 20020086166 A | 18-11-2002 |
| | | | US | 2003031278 A1 | 13-02-2003 |
| EP 1211819 | A1 | 05-06-2002 | AU | 7578801 A | 05-02-2002 |
| | | | CN | 1386334 A | 18-12-2002 |
| | | | WO | 0209317 A1 | 31-01-2002 |
| | | | JP | 3735015 B2 | 11-01-2006 |
| | | | JP | 2002043991 A | 08-02-2002 |
| | | | US | 2002164967 A1 | 07-11-2002 |
| US 2005135324 | A1 | 23-06-2005 | KR | 20050060631 A | 22-06-2005 |
| WO 2006075273 | A1 | 20-07-2006 | CN | 101147371 A | 19-03-2008 |
| | | | EP | 1839418 A1 | 03-10-2007 |
| | | | JP | 2008527883 T | 24-07-2008 |
| | | | US | 2008205555 A1 | 28-08-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. K. Cavers.** Performance of tone calibration with frequency offset and imperfect pilot filter. *IEEE Trans. Veh. Technol.,* May 1991, vol. 40, 426-434
- **P. A. Hoeher.** TCM on frequency-selective land-mobile fading channels. *Proc. 5th Tirrenia Intern. Workshop on Digital Commun.,* September 1991, 317-328
- **N. W. K. Lo ; D. D. Falconer ; A. U. H. Sheikh.** Adaptive equalization and diversity combining for mobile radio using interpolated channel estimates. *IEEE Trans. Veh. Technol.,* August 1991, vol. 40, 636-645
- **G. Auer.** Channel estimation in two dimensions for OFDM systems with multiple transmit antennas. *Global Telecommunications Conference, 2003, GLOBECOM '03, IEEE,* December 2003, vol. 1, 322-326
- **P. Hoeher ; S. Kaiser ; P. Robertson.** 2-dimensional pilot-symbol-aided channel estimation. *Proc. Information Theory, IEEE International Symposium,* June 1997, 123-127
- **G. Auer.** 3D pilot aided channel estimation. *Proc. Wireless Communications and Networking Conference, 2009. WCNC 2009, IEEE,* April 2009, 1-6
- **D. Fertonani ; A. Barbieri ; G. Colavolpe.** Novel graph-based algorithms for soft-output detection over dispersive channels. *Proc. Global Telecommunications Conference, IEEE GLOBECOM 2008, IEEE,* December 2008, 1-5

- **H. Niu ; M. Shen ; J. Ritcey ; H. Liu.** A factor graph approach to iterative channel estimation and LDPC decoding over fading channels. *Wireless Communications, IEEE Transactions,* July 2005, vol. 4, 1345-1350
- **C. Novak ; G. Matz ; F. Hlawatsch.** Factor graph based design of an OFDM-IDMA receiver performing joint data detection, channel estimation, and channel length selection. *Acoustics, Speech and Signal Processing, IEEE International Conference,* April 2009, 2561-2564
- **P. Hoeher ; S. Kaiser ; P. Robertson.** Two-dimensional pilot-symbol-aided channel estimation. *Proc. Information Theory., IEEE International Symposium,* June 1997, 123-127
- **G. Auer.** Channel estimation in two dimensions for OFDM systems with multiple transmit antennas. *Global Telecommunications Conference, 2003. GLOBECOM '03, IEEE,* December 2003, vol. 1, 322-326
- **F. R. Kschischang ; B. J. Frey ; H.-A. Loeliger.** Factor graphs and the sumproduct algorithm. *IEEE Trans. Inf. Theory,* February 2001, vol. 47, 498-519
- **T. Wo ; C. Liu ; P. A. Hoeher.** Graph-based iterative gaussian detection with soft channel estimation for MIMO systems. *Proc. ITG Int. Conf. on Source and Channel Coding,* January 2008
- **T. Wo ; C. Liu ; P. A. Hoeher.** Graph-based soft channel and data estimation for MIMO systems with asymmetric LDPC codes. *Proc. IEEE International Conference on Communications (ICC 2008),* May 2008, 620-624